# EUROPEAN PATENT APPLICATION

(11) **EP 4 711 636 A1**
(43) Date of publication of application: **18.03.2026**
(21) Application number: 24382986.8
(22) Date of filing: 16.09.2024
(51) Int. Cl.: F16D 1/076

(54) **FRICTION SHIM**

(71) Applicant: Siemens Gamesa Renewable Energy Innovation & Technology S.L., 31621 Sarriguren (Navarra) (ES)
(72) Inventor: Tejedor Diez, José Ángel, 31007 Pamplona (ES)
(74) Representative: SGRE-Association

(57) **Abstract**

The invention describes a friction shim (1) for use between the mating faces (21F, 22F) of two rotary components (21, 22) of a drivetrain (2), the friction shim (1) comprising a rigid substrate (10); an annular arrangement of holes (11), each hole (11) placed to receive a fastener (24) of a bolted joint between the rotary components (21, 22); characterized in that the outer edge (12) of the friction shim (1) comprises a series of lobes (12P, 12T) defined by a first radius (R1) and a second radius (R2), wherein the first radius (R1) extends from a centerpoint (C) of the friction shim (1) and crosses a hole (11) and extends beyond that hole (11) by a first predetermined distance (d1); the second radius (R2) extends between adjacent holes (11); and the first radius (R1) exceeds the second radius (R2) by a second predetermined distance (d2). The invention further describes a drivetrain (2) comprising such a friction shim (1) between the mating faces (21F, 22F) of first and second rotary components (21, 22); and a method of assembling such a drivetrain (2).

## Description

### Background

A wind turbine drivetrain can comprise a main shaft or low speed shaft that turns the first stage of a gearbox. The coupling between main shaft and gearbox might be direct or it can be preferable due to design reasons to include a coupling stage between the main shaft and the first stage of the gearbox. The wind turbine's aerodynamic rotor (rotor blades and hub) turns the main shaft, which - optionally by means of the coupling stage - turns the gearbox first stage. In such a configuration, the main shaft, coupling and gearbox first stage rotate at the same rate. These components are generally bolted together by bolted joints or flanges so that the mating faces (the end face of the "upwind" component and the front face of the "downwind" component) are pressed against each other.

In some wind turbine drivetrain configurations, torque transfer through a bolted joint can be improved to some extent by increasing the friction coefficient between the steel mating faces, e.g. metal spray can be applied to the mating faces in the bolted joint. However, as wind turbines become more powerful, such measures are insufficient to deal with the higher loads that result.

A more compact joint between the main shaft and the coupling stage can be realised by arranging a friction shim between mating faces of these rotary components and bolting the rotary components together. A friction shim generally comprises a thin but rigid substrate (e.g. steel sheet metal), and an even distribution of hard particles (e.g. industrial diamond particles) partially embedded on both sides of the substrate. The bolted joint applies pressure to the friction shim, so that the hard particles on each side of the shim become partially embedded also in the mating faces of the rotary components, creating an interference fit. This interference fit, micro-locking fit or "friction fit" makes it possible to transmit significantly higher torque between the rotary components, compared to an equivalent drivetrain with a conventional joint design as described above.

The bolted joint exerts a clamping force ("preload") on the joint, for example by threading each fastener or bolt into a thread that has been tapped into the rear face of the main shaft. The preload force should ensure that the particles become embedded in the mating faces so that the clamped parts remain in contact throughout the life of the joint. In order for a friction shim to fulfil its purpose, a certain minimum contact pressure (as specified by the manufacturer) must be maintained over the mating faces at all times. However, this cannot be guaranteed in a bolted joint of a large wind turbine drivetrain, since the non-uniform loading of the rotor blades (particularly in high wind conditions) results in bending loads and deflection of the main shaft and an uneven load distribution over the mating faces of the bolted joint. Under high load conditions, deflections of the rotary shaft reduce the effectiveness of the friction shim in regions near the periphery of the bolted joint. As a result, the hard particles on one or both sides of the shim can grind the mating surfaces in those regions, resulting in a "micro-movement" or "micro-slippage" of the friction shim.

It is therefore an object of the invention to overcome the problems outlined above.

This object is achieved by the claimed friction shim and by the claimed wind turbine drivetrain.

### Description

A friction shim, as explained above, is intended for use between mating faces of two rotary components in a machine such as a drivetrain, to increase the effectiveness of torque and load transfer from the first rotary component to the second rotary component. To this end, the friction shim comprises a relatively thin but rigid substrate made of a material such as steel, with numerous hard particles (e.g. diamond) partially embedded on either side of the substrate. The friction shim comprises an annular arrangement of holes, the holes having a diameter, and the holes being configured to receive a fastener of a bolted joint between the rotary components.

According to the invention, the friction shim is characterized in that its outer edge or outer contour comprises a series of lobes. The lobes are defined by alternating first and second radii, whereby the first radius extends from a centerpoint of the friction shim and crosses a hole and extends beyond that hole by a first predetermined distance. The word "crosses" does not mean that the hole is centrally crossed, but at least the circumference of the hole is crossed two times by the radius.

Preferably, the radius crosses the hole centrally, as this symmetry leads to the most efficient shape of the lobes to transfer maximum loads.

The second radius extends from the centerpoint of the friction shim and passes between adjacent holes.

The word "passes" means that the holes are not touched by the radius.

Preferably, the radius passes centrally between adjacent holes as this symmetry leads to the most efficient shape of the lobes to transfer maximum loads.

The first radius exceeds the second radius by a second predetermined distance.

The centerpoint is the geometric centre of the annulus, i.e., a point on the axis of rotation of the drivetrain.

The outer contour of the inventive friction shim therefore describes a curved path with "peaks" and "troughs": the distance of each "peak" to the centerpoint corresponds to the first radius; similarly the distance of each "trough" to the centre corresponds to the second radius. In other words, each lobe comprises a peak with a peak point with a maximum distance to the centerpoint. The first radius defines the distance between the centerpoint and the peak point. In the same way, each trough comprises a trough point with a minimum distance to the centerpoint. The second radius defines the distance between the centerpoint and the trough point. It is not excluded that a peak contains multiple peak points with the same distance to the centerpoint as well as a trough may contain multiple trough points with the same distance to the centerpoint. In a preferred embodiment, each peak comprises exactly one peak point and each trough contains exactly one trough point, as this leads to the most efficient shape of the lobes to transfer maximum loads.

Each lobe encompasses a hole that will receive a fastener, i.e. each first radius crosses through a preferably circular hole and extends beyond that hole by a first predetermined distance. Each second radius extends between adjacent holes. Therefore, if the bolted joint comprises n fasteners, the friction shim comprises preferably n circular holes to accommodate these fasteners, and the lobed outer edge of the friction shim will exhibit n lobes, i.e. n "peaks" and n "troughs". The outer edge or contour of the friction shim preferably describes a curved path without any discontinuities.

From analysis of a conventional friction shim as used in a wind turbine drivetrain configuration, the inventor has identified non-effective shim areas in the periphery of the friction shim. Non-effective shim areas are parts of the shim that fail to consistently "bite" into the mating faces, and which can exhibit unfavourably high levels of micro-slippage. The invention is based on the insight that the non-effective shim areas are evidence of insufficient contact pressure in those areas, and the inventor recognised that the non-effective shim areas lie outside the cones of compression of the bolts. An advantage of the inventive friction shim is that it exhibits an improved distribution of contact pressure over the service life of the drivetrain, particularly in regions adjacent the outer edge of the friction shim, by utilizing a lobed shape adapted to the cones of compression of the bolts. By "leaving out" ineffective material in the regions between adjacent cones of compression in the periphery, the overall contact pressures are increased over the surfaces of the mating faces. This prevents the initiation of grinding and the occurrence of micro-slippages, so that degradation of the friction shims is avoided.

At the same time, the area with sufficiently high pressure between the friction shim and the rotary components is maximized by the invention, as well as the number of hard particles which are pressed sufficiently in the surface of the rotary component. In this way the total friction between the rotary components is maximized by the invention, thus allowing for save transfer of higher loading in torsion and bending.

According to the invention, the drivetrain comprises at least a first rotary component and a second rotary component connected by a bolted joint; and an embodiment of the inventive friction shim placed between the mating faces of the first and second rotary components during assembly of the drivetrain.

According to the invention, a wind turbine comprises such a drivetrain, wherein the first rotary component is a main shaft, turned by the aerodynamic rotor, and wherein the second rotary component is a gearbox input shaft, a planet carrier or a coupling stage between the main shaft and a gearbox. Such connections between the main shaft and the gearbox are generally highly loaded due to the high rotor torque which results in a torsional load and additional loads in lateral direction due to gravitational loads or lateral rotor loads leading to shaft bending.

According to the invention a method of assembling a drivetrain according comprises the steps of placing a friction shim according to the invention between the mating faces of the first and second rotary components, inserting fasteners to connect the first and second rotary components and tightening the fasteners to a desired preload force to form the bolted joint.

Particularly advantageous embodiments and features of the invention are given by the dependent claims, as revealed in the following description. Features of different claim categories may be combined as appropriate to give further embodiments not described herein.

The inventive friction shim can be used between the mating faces of any two rotary components that are connected by a bolted joint, and which benefit from optimal transfer of torque and lateral forces. In the following, it may be assumed that the friction shim is dimensioned for use between the low-speed main shaft and a gearbox of a wind turbine drivetrain.

In a preferred embodiment of the invention, the first distance is at least 15%, preferably at least 30%, even more preferred at least 40% of the hole diameter and / or the second predefined distance is less than 30%, preferably less than 20% of the hole diameter.

Making the first distance at least 15% of the hole diameter, provides enough area for the pressure produced by the fastener to be transferred to the friction shim. Providing even more space like 30 or even 40% of the hole diameter allows more space for more hard particles to be pressed into the mating surfaces.

Making the second distance less than 30%, preferably even less than 20% of the hole diameter limits the peaks and the troughs to reasonable size for assuring a sufficient pressure distribution but at the same time providing a maximum friction surface for the friction shims.

According to another preferred embodiment of the invention, the second radius is at most 98% of the first radius, more preferably the second radius is at most 94% of the first radius. With these geometric constraints, a good performance of the lobes is achieved according to calculations performed by the inventor. Making the second radius at most 98%, preferably at most 94% of the first radius leads to a sufficient size of the lobes in in relation to the overall dimensions of the bolted joint.

According to another preferred embodiment of the invention, the series of lobes describe an essentially sinusoidal path or a path combining a series of at least 2 radii alternating in a regular sequence, in particular an inner radius and an outer radius, wherein the inner radius and the outer radius deviate in length less than 50%, preferably less than 30%.

Making the length deviation between the inner radius and the outer radius less than 50%, preferably less than 30% leads advantageously to a harmonic contour of the lobes and to an evenly distributed pressure between the friction shim and the mating faces.

Preferably, the inner radii and the outer radii are at least 110%, more preferred at least 130% of the hole diameter. These dimensions ensure a smooth contour of the lobes with sufficient surface to maximise the number of hard particles participating in the load transfer around the hole.

Preferably, the inner radii have their starting points on a outer diameter around the centerpoint, this outer diameter being larger than the bolt circle diameter, on which the fasteners are arranged.

Preferably, the outer radii have their starting points on an inner diameter around the centerpoint, this inner diameter being smaller than the bolt circle diameter, on which the fasteners are arranged.

This geometry ensures a smooth and harmonic contour of the lobes with sufficient surface to maximise the number of hard particles participating in the load transfer.

According to another preferred embodiment of the invention, the friction shim comprises a plurality of individual friction shim portions in particular between 5 and 16 friction shim portions, in particular identical portions. While a friction shim can be realised in one piece, the large dimensions of a wind turbine drivetrain generally mean that a friction shim is provided as a set of friction shim portions, for example seven friction shim portions, which together form a complete shim. The friction shim portions preferably have identical shapes. Multiple individual friction shim portions advantageously reduce the manufacturing costs for the friction shims and in addition facilitate the handling during mounting and servicing of the mating rotary components.

Since a friction shim is generally shaped according to the mating faces of the rotary components, its shape is based on an annulus. The inner edge or contour of the friction shim can be circular, with a diameter similar to the inner diameter of the mating faces.

According to another preferred embodiment of the invention, the friction shim has an outer diameter of more than 700 mm, preferably more than 900mm. An inner diameter can be in the order of 350mm. With these dimensions, which are unusually large for other applications, a advantageously efficient load transfer for the rotary components of a wind turbine drivetrain is realized.

According to another preferred embodiment of the invention, the friction shim comprises at least 12, preferably more than 18 lobes.

According to another preferred embodiment of the invention, the friction shim comprises at most 40, preferably less than 30 lobes. The number of lobes is an important parameter in the optimization of load transfer in given dimensions. With these numbers, internal calculations demonstrated that the best compromise between increasing the number of bolts and increasing the hole diameter is met, leading advantageously to a maximum load transfer in given dimensions.

The bolted joint in such a drivetrain can be formed using a suitable number of large fasteners. A fastener can be a bolt, in particular a double-end stud bolt, etc. In a wind turbine drivetrain, the coupling stage can comprise an annular arrangement of axial bores to receive the fasteners, and the main shaft can comprise a corresponding annular arrangement of tapped threads formed in its rear face or mating face. After assembling the parts, placing the friction shim between the mating faces and inserting the fasteners, the heads are tightened or torqued to the desired preload of the bolted joint.

As explained above, each first radius of the friction shim crosses the hole of a fastener and extends beyond that hole by a first predetermined distance. In a particularly preferred embodiment of the invention, the first predetermined distance extends to the limit of the pressure cone that will surround the corresponding fastener of the bolted joint. Of course, the first radius can extend further beyond the depth of the pressure cone, depending on the distance between the fasteners and the outer diameter of the mating faces. Preferably, the first predetermined distance does not extend beyond the depth of the pressure cone.

The bolted joint can comprise a single ring of fasteners. However, for torque transfer in a large wind turbine drivetrain, the bolted joint preferably comprises two concentric rings of fasteners, for example an outer ring comprising 21 fasteners and an inner ring comprising 14 fasteners. In such a configuration, a friction shim for placing between the mating faces will also comprise two corresponding annular arrangements of holes to receive the fasteners of the bolted joint.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a simplified cross-section through part of a wind turbine drivetrain;
Figure 2 shows a cross-section through the drivetrain of Figure 1 showing a prior art friction shim;
Figure 3 illustrates a problem related to the prior art friction shim of Figure 2;
Figure 4 shows a fastener and its pressure cone;
Figure 5, Figure 6 and Figure 7 illustrate preferred embodiments of the inventive friction shim.

In the diagrams, like numbers refer to like objects throughout. Objects in the diagrams are not necessarily drawn to scale.

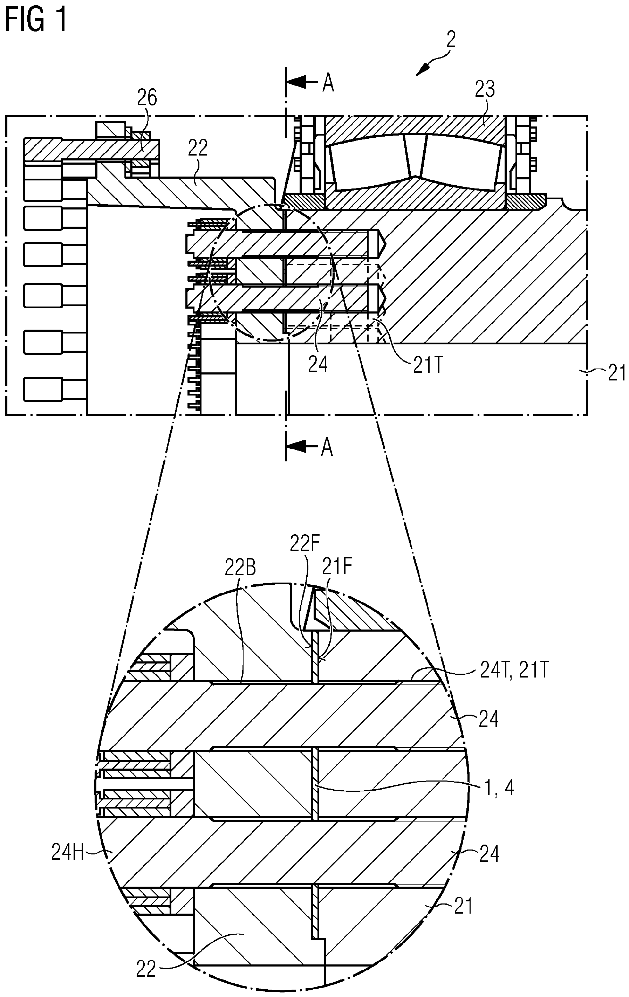

Figure 1 is a simplified cross-section through part of a wind turbine drivetrain 2, showing a coupling stage 22 that links the low-speed main shaft 21 to the gearbox (not shown). The coupling stage 22 is secured to the main shaft by an annular arrangement of fasteners 24, whereby each fastener 24 has a threaded end 24T that engages with a tapped thread 21T formed in the rear (i.e. downwind) face of the main shaft 21. In this exemplary embodiment, two concentric rings of fasteners 24 are used to connect the coupling stage 22 and main shaft 21. Of course, such components 21, 22 can also be connected using a single ring of fasteners 24.

In order to optimize torque transfer from the main shaft 21 to the coupling stage 22 in such a drivetrain, while achieving a favourably compact axial length of the coupling stage 22, a friction shim can be placed between the rear face 21F of the main shaft 21 and the front face 22F of the coupling stage 22.

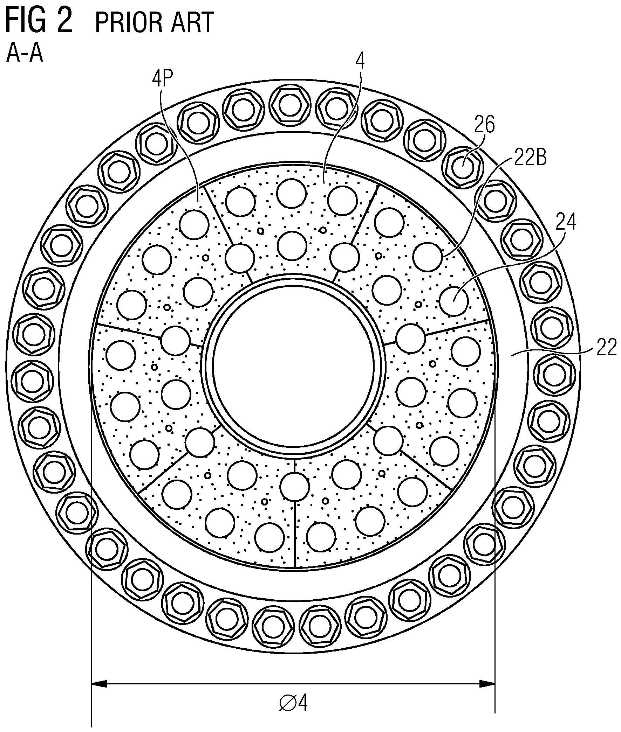

Figure 2 shows a cross-section A-A through the drivetrain 2 of Figure 1, looking in the direction of the gearbox (not shown), and indicating the gearbox fasteners 26 connecting the coupling stage 22 to the gearbox. The diagram indicates two concentric rings of axial bores 22B to receive the fasteners 24 that will clamp the coupling stage 22 and the main shaft 21. The diagram shows a prior art friction shim 4 used to achieve a friction fit between main shaft 21 and coupling stage 22 of such a drivetrain 2. The friction shim 4 comprises several identical shim portions 4P, seven in this case. The friction shim 4 has an annular form, i.e. its outer circumference is a circle, with a diameter 04 chosen so that the set of shims 4P essentially completely fills the mating faces 21F, 22F. Each shim portion 4P has a pattern of holes to fit about the axial fasteners 24 of the bolted joint.

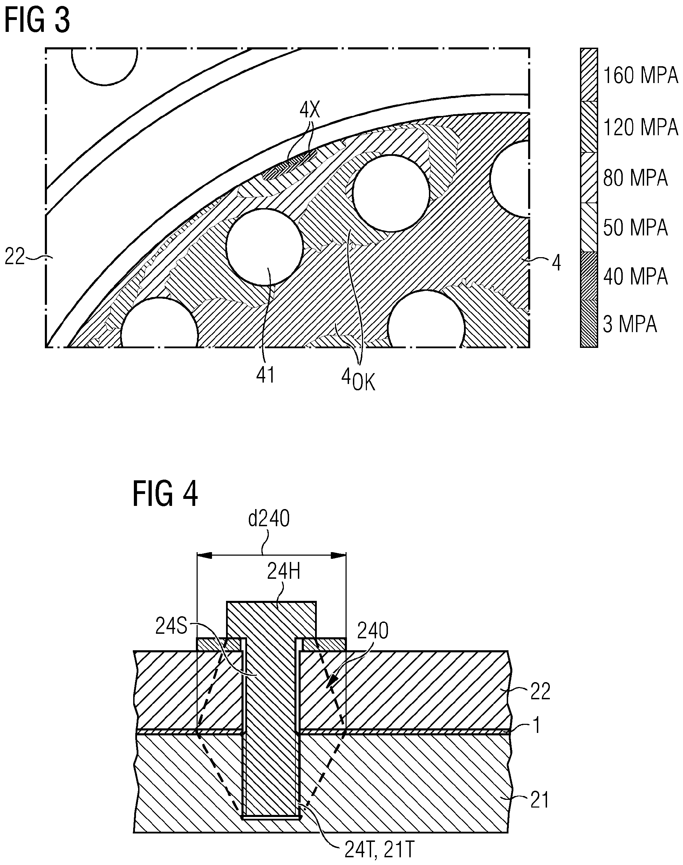

Figure 3 illustrates a problem observed during the service life of a wind turbine drivetrain that deploys the friction shim 4 of Figure 2. In order to make a friction shim 4 to function as intended by the manufacturer under all operating conditions, it is necessary for the joint to achieve a certain minimum contact pressure over the entire mating area. This diagram illustrates a partial loss of contact pressure under extreme operating conditions, e.g. high bending loads on the main shaft 21. While the required contact pressure is achieved over most regions 4_{OK} of the friction shim 4, in some regions 4X near the circumference of the friction shim 4, the contact pressure may fail to meet the manufacturer's specification. In these regions 4X, the friction fit can be unsatisfactory, since the friction shim 4 fails to make proper contact to the mating faces 21F, 22F. Insufficient contact pressure can initiate degradation of the friction shim, leading to a decrease in torque transfer capacity through the bolted joint.

The inventor has realized that the quality of the friction fit between the two mating surfaces 21F, 22F can be improved by "leaving out" regions of the friction shim that would otherwise degrade, and choosing a lobed contour based on the positions of the pressure cones as explained above. Figure 4 illustrates a pressure cone 240 for a fastener 24 of one of the tapped joints clamping the main shaft 21 to the coupling stage 22. The inventive friction shim 1 is placed between the mating faces 21F, 22F. The pressure cone 240 commences under the head 24H of the fastener 24, increases in diameter towards a maximum d240 within the body of the coupling stage 22 where the shim 1 is placed, and then decreases before terminating at the tapped bore 21T in the main shaft 21.

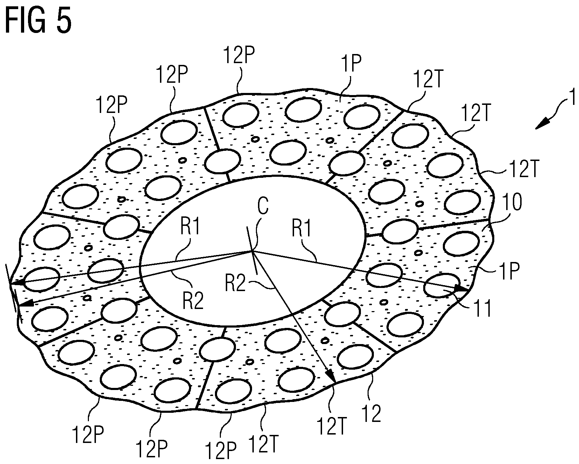

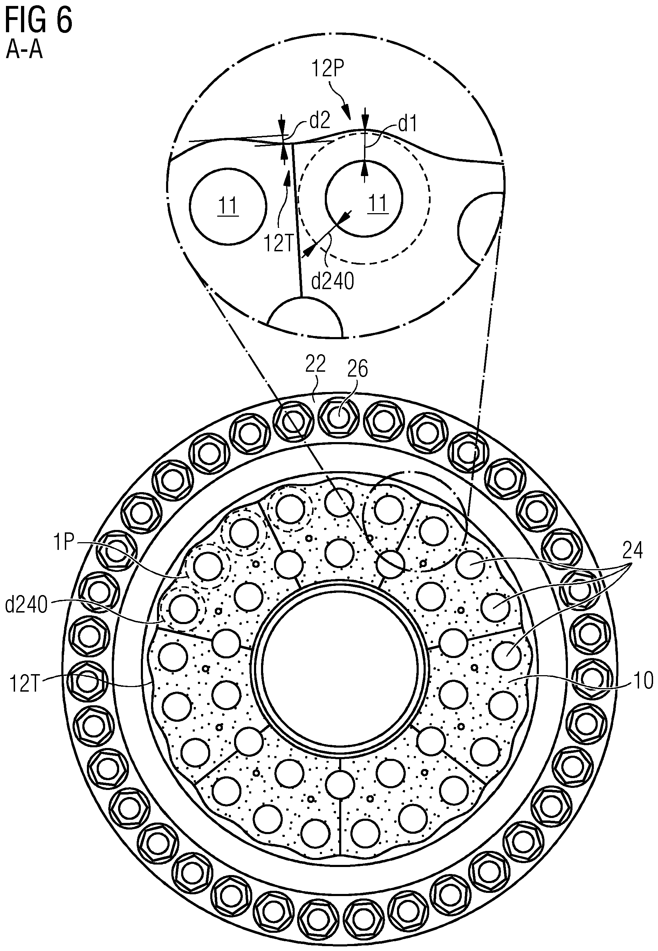

Figure 5 and Figure 6 illustrate an embodiment of a friction shim 1 according to the invention. Figure 5 is a perspective view of the friction shim 1, while Figure 6 is a cross-section A-A as indicated in Figure 1. Here also, the friction shim 1 comprises a rigid substrate 10 and several individual shim portions 1P. The form of the friction shim 1 is based on an annulus as shown in Figure 5 so that it covers most of the mating faces 21F, 22F. However, in the inventive approach, the perimeter or better named the outer edge 12 of the friction shim 1 is not a straightforward circle, and instead has a lobed shape that essentially "follows" the pressure cones 240 of the connecting bolts. To illustrate this aspect in Figure 6, ghost lines indicate the pressure cones 240 about several fasteners 24 in the outer bolt ring. The outer edge 12 of the friction shim 1 therefore comprises a series of alternating "peaks" 12P and "troughs" 12T in the manner of a shallow sinusoid.

The lobed path of the outer edge 12 of the shim 1 is defined by a first radius R1 and a second radius R2. The first radius R1 crosses a hole 11 and in the shown embodiment even passes through the midpoint of a hole 11 and extends beyond that hole 11 by a first predetermined distance d1 as shown in the enlarged portion of Figure 6. The second radius R2 extends between adjacent holes 11, and is shorter than the first radius R1 by a second predetermined distance d2. In an exemplary embodiment of the inventive shim, dimensioned for use in a bolted joint with a mating face diameter of 0.9 metres, the first radius R1 is 436 mm and the second radius R2 is 426 mm, i.e. the second radius is less than 98% of the first radius R1. In this exemplary embodiment, the first predetermined distance d1 depends on the position and metric size of the fastener and can be in the order of 24 mm. The second predetermined distance d2 is the difference between the radii R1, R2 and is 10 mm in this exemplary embodiment.

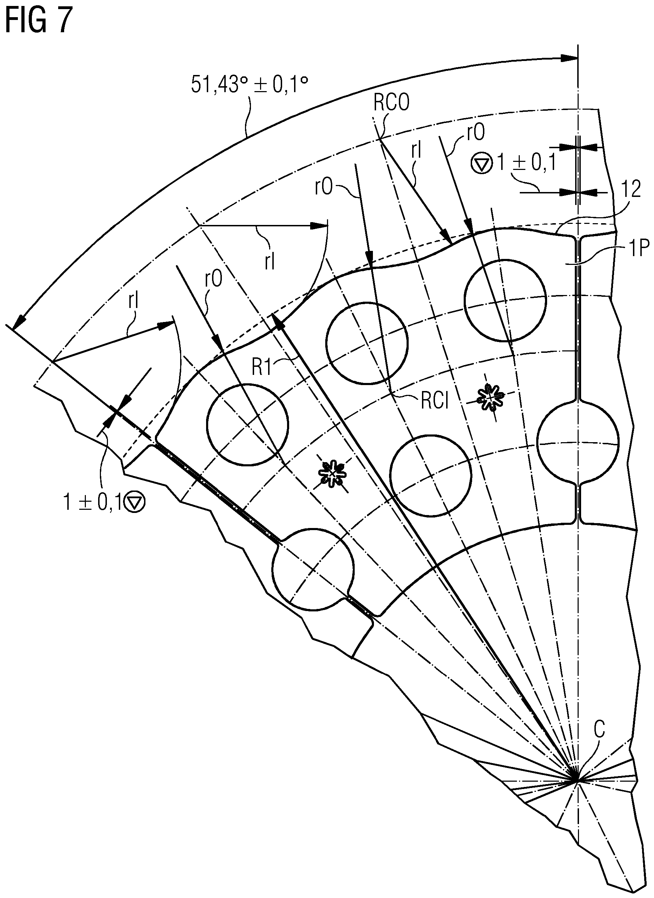

Figure 7 illustrates an exact definition of the outer edge 12 of the friction shim portion 1P. As explained above, it might be a an essentially sinusoidal path. A preferred embodiment due to ease of manufacturing is a path combining a series of at least 2 radii alternating in a regular sequence as illustrated in the embodiment of an inventive shim portion 1P. An inner radius rI and an outer radius rO are alternating in a regular sequence. The inner radius rI extends from the outer base radius RCO which gives the distance from the Centerpoint C to the center of rI. The outer radius rO extends from the inner base radius RCI which gives the distance from the Center Point C to the center of rO.

Preferably, the inner radius rI and the outer radius rO deviate in length less than 50%, preferably less than 30%. This leads to a harmonic shape of the outer edge 12 of the shim 1 what advantageously results in an even contact pressure for the shim 1. In the shown embodiment, rI and rO are advantageously equal in length, both 100m. RCI is set to 336mm and RCO is set to 525,88mm leading to the shown preferred exemplary geometry which was optimized with FE-calculations. The hole diameter d11 is set to 64,5mm for receiving a M64 fastener. So, rI and RO are at least 110%, even more than 130% of d11, to advantageously provide enough surface around the fastener for hard particles to carry the load.

The superior performance of the inventive friction shim 1 of Figures 5 and 6 has been verified in the joint of Figure 1. Over the entire extent of the inventive friction shim 1, contact pressures of at least 50 MPa have been observed in tests with the same loading used to assess the performance of the prior art shim 4 of Figure 3. The inventive friction shim ensures that the required minimum contact pressure is achieved over all of the friction shim 1, also in regions near the outer edge 12 of the friction shim 1 under high bending loads in the main shaft 21. In other words, the inventive friction shim 1 ensures that the contact pressure meets the manufacturer's specification in all operating conditions. Compared to the prior art approach, the uniform friction fit and consistently high contact pressure of the inventive friction shim 1 can significantly improve torque transfer from the main shaft 21 to the coupling stage 22, thereby allowing for increased power output of the wind turbine.

Although the present invention has been disclosed in the form of preferred embodiments and variations thereon, it will be understood that numerous additional modifications and variations could be made thereto without departing from the scope of the invention. For example, as will be clear to the skilled person, specific dimensions of the lobed geometry of the inventive friction shim will depend on the geometry of the mating faces of the rotary bolted joint, and on the stiffness of the clamping elements or fasteners.

For the sake of clarity, it is to be understood that the use of "a" or "an" throughout this application does not exclude a plurality, and "comprising" does not exclude other steps or elements.

### Reference list

- 1: Friction Shim
- 1P: Shim Portions
- 2: Drivetrain
- 4: Prior Art Friction Shim
- 4P: Prior Art Shim Portions
- 10: Rigid Substrate
- 11: Hole
- 12: Outer Edge
- 12P: Peaks
- 12T: Troughs
- 21: Main Shaft
- 21F: Rear Face
- 21T: Tapped Bore
- 22: Coupling Stage
- 22B: Axial Bores
- 22F: Front Face
- 24: Fastener
- 24H: Head of Fastener
- 24T: Threaded End
- 26: Gearbox Fasteners
- 240: Pressure Cone

- C: Centerpoint
- d1: First Predetermined Distance
- d2: Second Predetermined Distance
- d11: Hole Diameter
- D240: Maximum Diameter
- R1: First Radius
- R2: Second Radius
- rI: Inner Radius
- rO: Outer Radius
- RCI: Inner Base Radius
- RCO: Outer Base Radius

## Claims

1. A friction shim (1) for use between mating faces (21F, 22F) of two rotary components (21, 22) of a drivetrain (2), the friction shim (1) comprising
- a rigid substrate (10); and
- an annular arrangement of holes (11), the holes (11) having a diameter (d11), the holes(11) being configured to receive a fastener (24) of a bolted joint between the rotary components (21, 22);
**characterized in that**
the outer edge (12) of the friction shim (1) comprises a series of lobes (12P, 12T) defined by a first radius (R1) and a second radius (R2), wherein
- the first radius (R1) extends from a centerpoint (C) of the friction shim (1) and crosses a hole (11) and extends beyond that hole (11) by a first predetermined distance (d1) ;
- the second radius (R2) extends from the centerpoint (C) of the friction shim (1) and passes between adjacent holes (11); and
- the first radius (R1) exceeds the second radius (R2) by a second predetermined distance (d2).

2. A friction shim (1) according to the preceding claim, wherein the first distance (d1) is at least 15%, preferably 30% of the hole diameter (d11) and / or the second predefined distance (d2) is less than 30%, preferably less than 20% of the hole diameter (d11).

3. A friction shim (1) according to any of the preceding claims, wherein the second radius (R2) is at most 98% of the first radius (R2), more preferably the second radius (R2) is at most 94% of the first radius (R2).

4. A friction shim (1) according to any of the preceding claims, wherein the series of lobes (12P, 12T) describe an essentially sinusoidal path or a path combining a series of at least 2 radii alternating in a regular sequence, in particular an inner radius (rI) and an outer radius (rO), wherein the inner radius (rI) and the outer radius (rO) deviate in length less than 50%, preferably less than 30%.

5. A friction shim (1) according to any of the preceding claims, wherein the friction shim (1) comprises a plurality of individual friction shim portions (1P), in particular between 5 and 16 friction shim portions (1P), in particular identical portions.

6. A friction shim (1) according to any of the preceding claims, wherein the friction shim has an outer diameter of more than 700 mm, preferably more than 900mm.

7. A friction shim (1) according to any of the preceding claims, wherein the friction shim (1) comprises at least 12, preferably more than 18 lobes (12P, 12T).

8. A drivetrain (2) comprising at least
- a first rotary component (21) and a second rotary component (22) connected by a bolted joint; and
- a friction shim (1) according to any of claims 1 to 7 between the mating faces (21F, 22F) of the first and second rotary components (21, 22).

9. A drivetrain according to the preceding claim, wherein the bolted joint comprises an annular arrangement of axially aligned fasteners (24).

10. A drivetrain according to any of claims 8 to 9, wherein a fastener is a bolt (24), in particular a double-ended stud bolt.

11. A drivetrain according to any of claims 8 to 10, wherein the second rotary component (22) comprises an annular arrangement of axial bores (22B) to receive the fasteners (24), and the first rotary component (21) comprises a corresponding annular arrangement of tapped threads (21T).

12. A drivetrain according to any of claims 8 to 11, wherein the bolted joint between the first rotary component (21) and the second rotary component (22) comprises at least two concentric rings of fasteners (24), and wherein the friction shim (1) comprises two corresponding annular arrangements of holes (11) to receive the fasteners (24).

13. A wind turbine comprising a drivetrain (2) according to any of claims 8 to 12, wherein the first rotary component is a main shaft (21) and wherein the second rotary component is a gearbox input shaft, a planet carrier or a coupling stage (22) between the main shaft (21) and a gearbox.

14. A method of assembling a drivetrain (2) according to any of claims 8 to 12, the method comprising the steps of
- placing a friction shim (1) according to any of claims 1 to 7 between the mating faces (21F, 22F) of the first and second rotary components (21, 22);
- inserting fasteners (24) to connect the first and second rotary components (21, 22); and
- tightening the fasteners (24) to a desired preload force to form the bolted joint.
